# EUROPEAN PATENT SPECIFICATION

(11) **EP 3 962 624 B1**
(45) Date of publication and mention of the grant of the patent: **20.12.2023**
(21) Application number: 20727497.8
(22) Date of filing: 01.05.2020
(51) Int. Cl.: B01D 19/04

(54) **USE OF ALCOHOL ALKOXYLATE MIXTURES AS CONCENTRATED AQUEOUS DEFOAMERS**
VERWENDUNG VON ALKOHOLALKOXYLAT-MISCHUNGEN ALS KONZENTRIERTE WÄSSRIGE ENTSCHÄUMER
UTILISATION DE MÉLANGES D'ALCOXYLATE D'ALCOOL EN TANT QU'AGENTS ANTI-MOUSSE AQUEUX CONCENTRÉS

(30) Priority: 03.05.2019 US 201962842669 P
(43) Date of publication of application: 09.03.2022
(73) Proprietor: Sasol Chemicals GmbH, 20537 Hamburg (DE)
(72) Inventor: JAMES, Ollie, Westlake, LA 70669 (US); LANDRY, Dustin, Westlake, LA 70669 (US); STANCIU, Cornell, Westlake, LA 70669 (US); FERNANDEZ, Jorge, M., Westlake, LA 70669 (US); DIARRA, Alpha, Westlake, LA 70669 (US)
(74) Representative: Müller Schupfner & Partner Patent- und Rechtsanwaltspartnerschaft mbB
(86) International application number: PCT/US2020/030938
(87) International publication number: WO 2020/227056

(56) References cited:
- WO-A1-91/00763
- US-A- 6 028 229
- US-B1- 6 534 550
- US-B1- 6 562 875

## Description

The present invention relates to use of alcohol alkoxylates or mixtures thereof as concentrated aqueous defoamers, antifoamers and deaerators. More specifically, the alcohol alkoxylates relate to linear long chain alcohol alkoxylates, to be used as additives for foam prevention, foam destruction and deaerating in various application areas.

### BACKGROUND OF THE INVENTION AND DISCUSSION OF THE PRIOR ART

In various industrial processes, occurrence of foams creates troublesome environments that could for example have a negative impact on reaction rates and prevent normal, optimised operation in general. Current methods to control foam include mechanical means such as the use of baffles and mixing control systems. In conjunction, chemical defoamers or antifoamers are often used. There are different classes of additives used in prevention, removal and mitigation of foam formation that work via differing mechanisms and are effective for different foam types (e.g. macro vs micro foams). While in principle these classes differ, the terms used to define them are often used interchangeably. In addition, many, if not most additives, do not solely perform only one function.

Antifoams are additives that prevent or inhibit foam formation from the outset, and are typically added to a potentially foaming solution prior to foam formation. Defoamers are compounds that are added to mixtures in order to destroy foam that has already been generated, targeting surface foam (macro foam) and aiming to bring about rapid foam collapse. Deaerators function in a manner similar to defoamers, also aiming to destroy foam that has already been generated, but they target sub-surface foam (micro foam).

Well known defoamers, antifoamers and deaerators include amongst others silicone oils as well as block copolymers of lower alkylene glycols. US 6,534,550 describes defoamer compositions comprising alcohols, alcohol alkoxylates, emulsifier components and water to prevent and inhibit formation of foam in aqueous systems. The compositions of US 6,534,550 are emulsions requiring a precise mixture of a number of different components to achieve the results. US 6,562,875 describes the use of alkoxylated alcohols together with emulsifiers such as anionic surfactants as antifoamers in the paper industry. Other anti foam compositions are disclosed in WO91/00763 and US6028229.

There is however an ongoing need for stable, simple, low cost, aqueous defoamers, antifoamers and / or deaerators in concentrated form for effective application in the chemical, household and industrial process industries.

### OBJECT OF THE PRESENT INVENTION

The advantage of the compounds or mixture of compounds and their inventive use in aqueous systems, is the provision of concentrated surfactants with ultra-low particle sizes. The nature of the specific alcohol alkoxylates described result in insoluble, but ultra-dispersable surfactants for the effective defoaming, antifoaming and deaeration of aqueous feeds present in various chemical, household and industrial processes.

### SUMMARY OF THE INVENTION

The present invention relates to the use a range of alcohol alkoxylates as defoamers, antifoamers and / or deaerators for aqueous phases relating to various application areas. These include general defoaming, antifoaming and deaerating applications, specifically useful in, but not limited to, oil and gas applications, the agrochemical field, water treatment processes, as well as technology areas such as pulp and paper, fermentation, detergents, metal working fluids, paints and coatings, emulsion polymerization and construction.

The invention specifically teaches the use of an alcohol alkoxylate or an alcohol alkoxylate mixture as a concentrated defoamer, antifoamer and / or deaerator wherein the alcohol alkoxylate or alcohol alkoxylate mixture comprises at least an alcohol alkoxylate, wherein the alcohol alkoxylate has a molecular structure as shown in [I]:

R-O-(CH₂(CH₃)CHO)ₘ-(CH₂CH₂O)ₙ-H [I]

wherein R is a branched and/or linear alkyl group having from 20 to 50 carbon atoms, preferably 20 to 30 carbon atoms,
m = 10 - 40, preferably 20-25
n = 1 - 5, preferably 1-2.

The ratio of moles of PO to moles of EO is from 14:1 to 20:1, and more preferably 20:1, and wherein the alcohol alkoxylate has an average particles size less than 45 µm.

A feature of the invention is amongst others the extremely low dosing required. The alcohol alkoxylate or the alcohol alkoxylate mixture is added in a concentration of between 50 ppm and 3,000 ppm, more preferable between 100 and 2,500 ppm, and most preferable between 100 and 500 ppm.

The compounds described in this invention display good chemical and thermal stability. The temperature of use can range between 20 and 100°C and more preferable between 20 and 80°C.

In addition, the alcohol alkoxylates described provide excellent defoaming, antifoaming and deaerating performance in concentrated form and are highly active. The use of the alcohol alkoxylate or the alcohol alkoxylate mixture is most beneficial when no additional additives, liquids or solids, such as emulsifiers, solvents and carriers, are added.

Additional advantages include, but are not limited, to the compounds of the invention being silicone-free, non-explosive, non-flammable, highly salt tolerant and non-corrosive.

The invention further describes a method of defoaming and/or deaerating and/or antifoaming an aqueous foam, wherein the aqueous foam comprises an aqueous phase and a gas, and wherein the method comprises:
i) providing a composition comprising at least:
   an alcohol alkoxylate, wherein the alcohol alkoxylate has a molecular structure as shown in [I]:

      R-O-(CH₂(CH₃)CHO)ₘ-(CH₂CH₂O)ₙ-H [I]
   wherein R is a branched and/or linear alkyl group having from 20 to 50 carbon atoms, preferably 20 to 30 carbon atoms, m = 10 - 40, preferably 20 to 25,
   n = 1 - 5, preferably 1 to 2, and wherein the ratio of moles of propylene oxide (PO) to moles of ethylene oxide (EO) is from 14:1 to 20:1.
ii) contacting said aqueous foam with said composition whereby said aqueous foam collapses.

The alcohol alkoxylate or alcohol alkoxylate mixture used in the present invention has an average particle size less than 45µm, preferably less than 15 µm, and most preferably less than 4 µm. The low particle size improves the dispersibility of the defoamer / antifoamer in the aqueous feeds, resulting in easily dispersable compounds with minimal mixing or agitation required.

Unlike the prior art, the present invention uses a concentrate defoamer which does not require emulsifiers or the like to achieve foam reduction / prevention.

### BRIEF DESCRIPTION OF THE DRAWINGS

Fig. 1 shows a comparison of foam height reduction after dosages of additives.
Fig. 2 shows a comparison of final foam heights after dosages of additives.
Fig. 3 shows the defoaming performance of various defoamers.
Fig. 4 shows the foam reduction achieved by various defoamers at a dosage of 500 ppm.

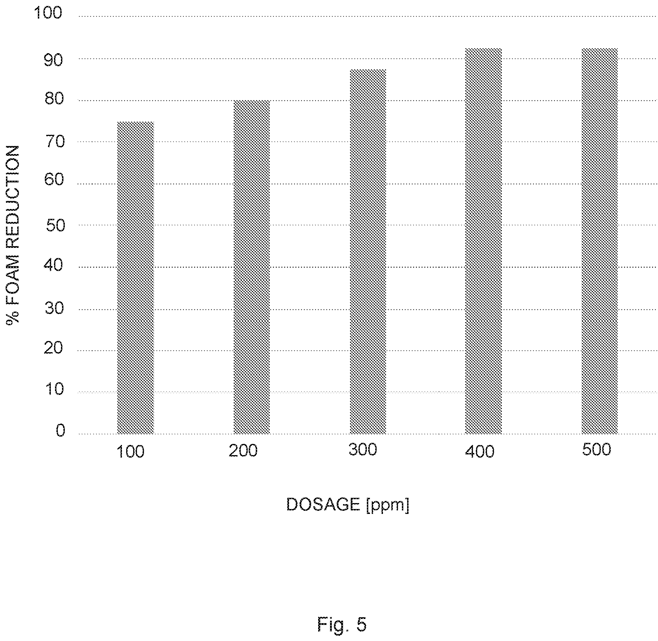

Fig. 5 shows the defoaming performance of C2030-20PO-1EO at various dosages.

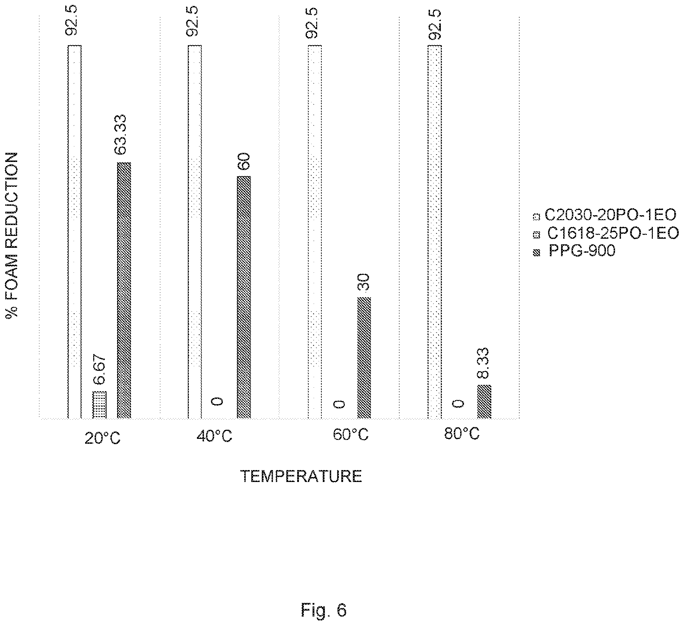

Fig. 6 shows the defoaming performance of C2030-20PO-1EO at various temperatures.
Fig. 7 shows the performance of defoaming agents compared to commercial samples.
Fig. 8 shows the half-life for various defoamers.
Fig. 9 shows the performance of defoamers with various numbers of PO and EO units.

### DETAILED DESCRIPTION OF PREFERRED EMBODIMENTS

The surfactants used in the present disclosure are effective defoamers, antifoamers and/ or deaerators for a wide variety of aqueous phases. The performance of the compositions can be optimally designed by tailoring the hydrophobe structures of the compounds, together with the number of propylene oxide (PO) and / or ethylene oxide (EO) units, for a specific application area.

### Materials

A number of surfactants, namely alkoxylated alcohols, were synthesized according to standard procedures (see Experimental section) and their properties characterized.

The materials used in various tests to determine efficiency of compounds as defoamers / antifoamers / deaerators are shown in Table 1:

**Table 1: Materials used to evaluate defoaming / antifoaming / deaerating properties**

| **Alcohol Trade Name** | **Alcohol carbon chain length** | **Alcohol structure** | **Number of propylene oxide units (PO)** | **Number of ethylene oxide units (EO)** |
|---|---|---|---|---|
| ALFOL20⁺ | C20-30 | linear | 35 | 5 |
| ALFOL20⁺ | C20-30 | linear | 35 | 1 |
| ALFOL20⁺ | C20-30 | linear | 35 | 0 |
| ALFOL20⁺ | C20-30 | linear | 20 | 1 |
| ALFOL20⁺ | C20-30 | linear | 19 | 2.5 |
| ALFOL20⁺ | C20-30 | linear | 19 | 0 |
| ALFOL20⁺ | C20-30 | linear | 14 | 5 |
| ALFOL20⁺ | C20-30 | linear | 14 | 1 |
| ALFOL20⁺ | C20-30 | linear | 14 | 0 |
| UNILIN alcohol | C20+ | linear | 30 | 0 |
| Behenyl Alcohol | C20-22 | linear | 20 | 1 |
| ISOFOL12 | C12 (Guerbet) | 100% 2-alkyl branched (1.0 branch / molecule) | 32 | 3 |
| ISOFOL20 | C20 (Guerbet) | 100% 2-alkyl branched (1.0 branch / molecule) | 20 | 1 |
| SAFOL23 | C24-26 | 50% branched (2.16 branch / molecule) | 25 | 1 |
| ISOFOL32 | C32 (Guerbet) | 100% 2-alkyl branched (1.0 branch / molecule) | 15 | 1 |

All examples represented by trade names above are marketed by Sasol Performance Chemicals, except UNILIN which was sourced from Baker Hughes.

Table 2 shows the commercial prior art defoamers that were used for comparative experiments.

**Table 2: Defoamers used for comparative examples**

| **Name** | **Description** | **Alcohol Structure** |
|---|---|---|
| BASOPUR DF 5* | C1618 - 28PO-2EO | Linear |
| EMULDAC 251 PE** | C1618-25PO-1EO | Linear |
| PDMS (OH terminated) | Polydimethylsiloxane (MW = 550 - 3,200 Da) | N/A |
| Carpol PGP 400*** | Polypropylene glycol (PPG-400_ Mol wt = 400 Da | N/A |
| | Polypropylene glycol (PPG-900) Mol wt = 900 Da | N/A |

| | | |
|---|---|---|
| *Sold by BASF **Sold by Sasol Performance Chemicals ***Sold by Carpenter. | | |

Table 3 lists the foamers that were used for the various defoaming experiments.

**Table 3: Commercial foamers used for defoaming experiments**

| **NAME** | **DESCRIPTION** |
|---|---|
| HF100C* | C610-3.5EO Sulfate |
| Coconut DEA | Coconut diethanolamide |
| CAPB | Cocamidopropyl Betaine |
| C₁₂₋₁₆ APG | C₁₂₋₁₆ alkyl polyglycoside |
| C₁₂ LAS | C₁₂ linear alkylate sulfate |

| | |
|---|---|
| *Available from Thatcher Chemicals | |

### EXPERIMENTAL SECTION

### Synthesis of alkoxylated (PO/EO) alcohols used for the experiments

Alcohols ranging from C12-32 were propoxylated and ethoxylated utilizing wellknown alkoxylation catalysts such as double metal cyanide (DMC) or KOH catalysts. Each alcohol product was targeted to consist of between 10 to 40 moles of propylene oxide and 0-5 mole of ethylene oxide. The samples were prepared in a 600 ml Parr reactor using the alkoxylation catalyst of choice. Each alcohol was propoxylated using purified propylene oxide at 130-150 °C and 40- 60 psig and then ethoxylated using purified ethylene oxide at 150-160 °C and 40-60 psig in a single, continuous run. (1 psi = 0.07 bar).

### Experiment 1:

The first test parameters aimed to compare additives' ability to destroy stable surface foam and act as a true defoamer.

### Experimental Procedure:

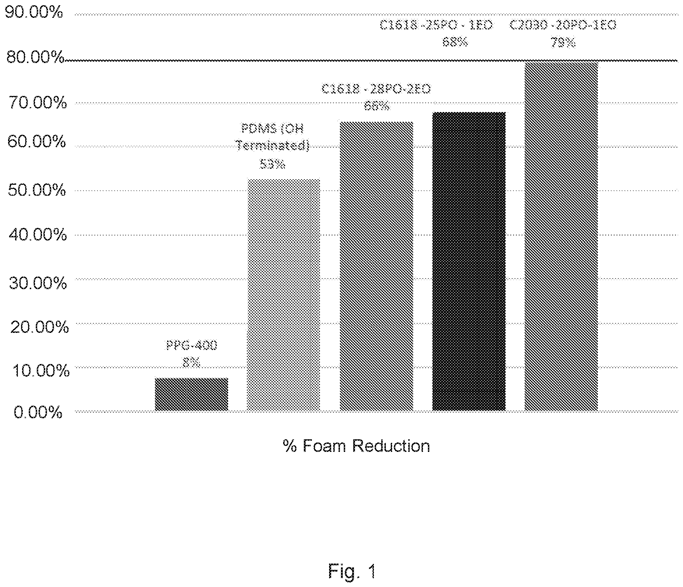

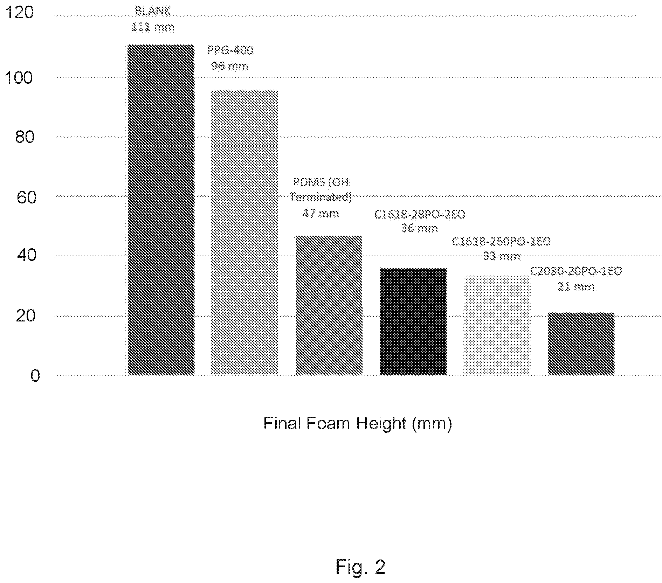

The foam reduction test was aimed at comparing each defoamer's ability to knockdown or destroy foam that has already been generated. The test was performed by pouring 40 ml of nanopure water containing 2500 ppm commercial foamer (C610-3.5EO Sulfate) into the glass column of the foam analyzer. The solution was stirred for 30 seconds at 8000 rpm to generate foam. Stirring was stopped, and the foam was allowed to stabilize for 1 minute. After 1 minute, initial foam height was recorded and defoamer was added to the foamed solution at 2500 ppm. The solution was stirred for 1 minute at 8000 rpm and stopped. The foam was allowed to stabilize for 30 seconds, and final foam height was recorded. The test was repeated for each of the defoamers. A blank was also performed utilizing the same procedure except no defoamer was added. The total percentage of foam reduction from initial foam height to final foam height was calculated for each defoamer (see Figure 1). Final foam heights (see Figure 2) were also compared for all defoamers and the blank.

Figures 1 and 2 show the defoamer performance decreases as follows: C2030-20PO-1EO > C1618-25PO-1EO> C1618-28PO-2EO> PDMS, OH terminated > PPG 400.

### Experiment 2:

### Experimental Procedure:

A 40 ml solution containing 2500 ppm of HF100C (610-3.5EO sulfate - AES) in DI-H₂0 was added to the Kruss foam analyzer and sparged with air at a rate of 0.2 L/min. through a bottom fritted disc with an average pore size of 100-160 µm. Once the foam height reached ~ 150 mm, while continuing the air sparge, 2500 ppm of defoamer was added to the solution. Sparging was continued until a total sparge time of 500 seconds had elapsed or the foam height had reached the maximum capacity of the Kruss instrument. This test allowed for evaluation of the amount of initial foam knock-down immediately following the addition of defoamer (defoaming) along with the defoamer's ability to maintain this initial knock-down over time (antifoaming).

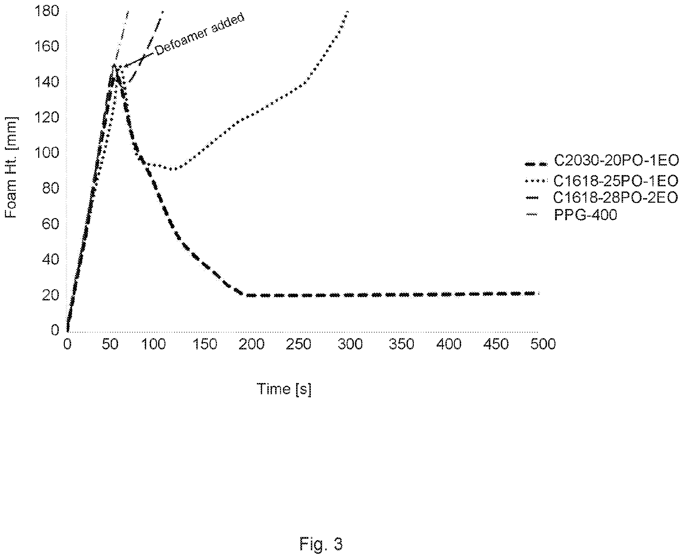

Figure 3 clearly illustrates the superior defoaming as well as antifoaming performance of an example of an inventive compound (C2030-20PO-1EO) over an extended period of time, when compared to commercial samples.

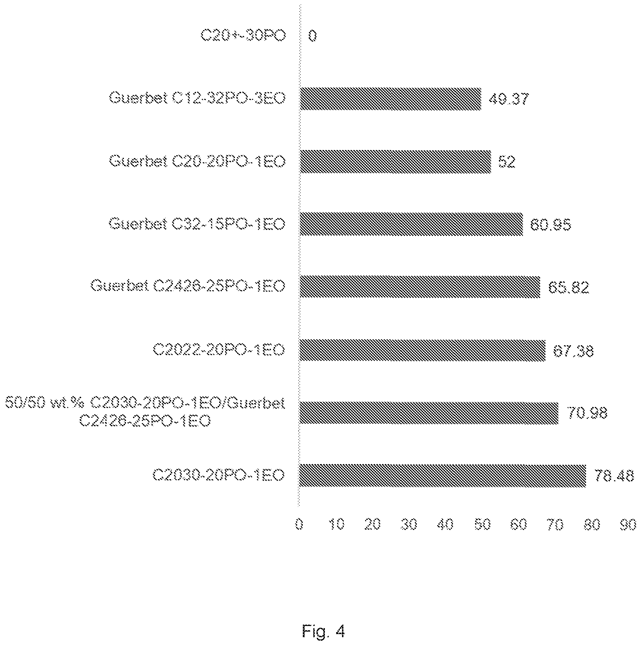

**Experiment 3:** The same experimental procedure as described for Experiment 1 was used. Figure 4 compares foam height reduction after a 500 ppm dosage of various additives, respectively.

Figure 4 shows the defoamer performance decreases as follows:
C2030-20PO-1EO > (mixture of 50/50wt% C2030-20PO-1EO/GuerbetC2426-25PO-1EO) > C2022-20PO-1EO > GuerbetC2426-25PO-1EO > GuerbetC32-15PO-1EO > GuerbetC20-20PO-1EO > GuerbetC12-32PO-3EO > C20+-30PO.

### Experiment 4:

The maximum defoaming performance obtained by different dosage rates of C2030-20PO-1EO after the lapse of an extended time period was compared.

### Experimental Procedure:

A 2000 ml aqueous solution containing 2 500 ppm of HC100C (foaming medium) was added to a recirculating foaming apparatus and circulated at room temperature to generate foam. Once the foam height reach 30 cm, the defoamer C2030-20PO-1EO was dosed at different concentrations (100, 200, 300 and 400 ppm) while continuously circulating the foaming solution. The minimum foam height reached for each dosage was recorded and the % foam reduction calculated.

It follows that even at low dosage rates as 100 ppm, the described additives still exhibit superior performance.

### Experiment 5:

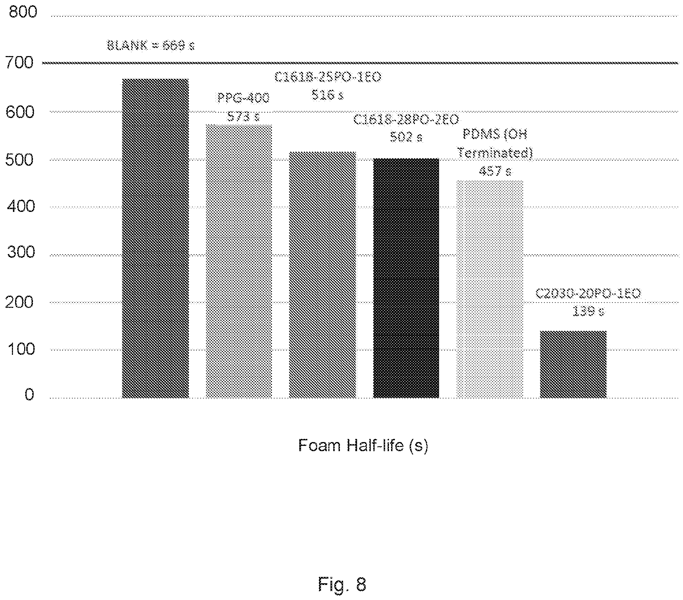

The same experimental procedure as used for Experiment 4 was followed. Figure 8 compares the effectiveness of defoaming behavior of the described compounds to commercial samples at different temperatures after extended time periods.

As described in the experimental method, when no additional change in defoaming performance were observed. The C2030-20PO-1EO additive exhibited superior defoaming performance over a wide range of temperatures, compared to commercial additives.

### Experiment 6:

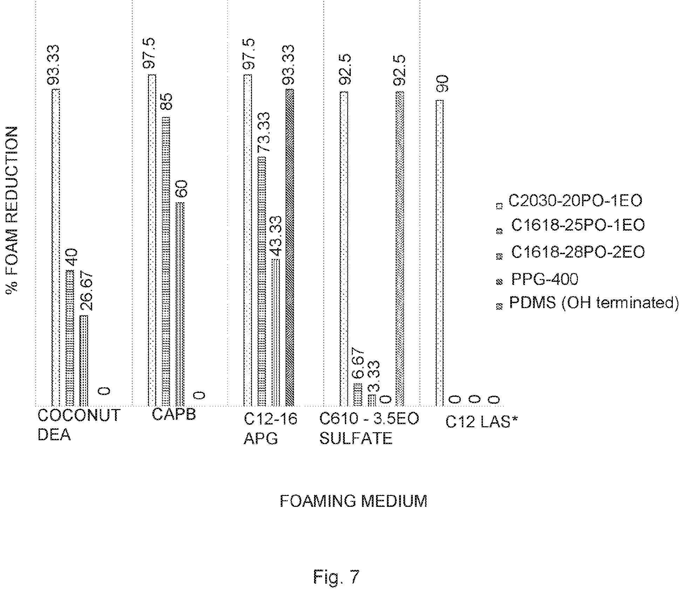

The same experimental procedure as used for Experiment 4 was followed. Figure 7 illustrates the performance of an example of the described compounds in various foaming mediums, compared to the performance of commercial samples.

The C2030-20PO-1EO additive showed superior defoaming behavior together with various foamers, when compared to commercial defoaming additives.

### Experiment 7:

An antifoaming test was performed to compare each additive's antifoaming potential and deaerating abilities to remove entrapped air by promoting liquid drainage from the lamella and bubble coalescence resulting in faster foam decay.

### Experimental Procedure:

An antifoaming test was performed with the Krüss DFA100 and was aimed at comparing each of the defoamer's antifoaming and deaerating abilities. The test was performed by pouring 40 mL of nanopure water containing 2500 ppm commercial foamer (C610-3.5EO sulfate) and 2500 ppm defoamer into the instrument's glass column. Air was then sparged from the bottom through a filter plate with pore sizes ranging from 16-40 µm at a flow rate of 0.3 L/min. Sparging was continued and foam was generated for 2 minutes or until the foam reached the maximum height of the column (210 mm). Sparging was stopped, and the foam was allowed to decay for 15 minutes. The test was repeated for each defoamer as well as a blank that contained no defoamer. The defoamers' antifoaming abilities can be determined by comparing their maximum foam heights during the 2 minute sparging period (see Table 4). Comparing the rate of foam decay as a function of foam half-life (see Figure 10), the time at which foam volume has reduced to 50% for each defoamer tested also indicated its ability at aiding in the drainage and coalescence of standing foams.

**Table 4: Comparison of the maximum foam height reached with various defoamers**

| Defoamer | Maximum Foam Height (mm) |
|---|---|
| C2030-20PO-1EO | 153.5 |
| C1618-28PO-2EO | 213.0 |
| PDMS (OH Terminated) | 213.1 |
| PPG-400 | 213.6 |
| C1618-25PO-1EO | 213.6 |
| BLANK | 214.4 |

Table 4 shows that C2030-20PO-1EO was the only observable additive to exhibit enhanced antifoaming properties. It was the only additive tested where the maximum foam height (153.5 mm) did not reach the 210 mm foam height set point which triggered an automatic shutdown of foam formation.

Deaerator performance can be examined by comparing the rate of foam decay as a function of foam half- life, shown in Figures.

Comparative deaerator performance of the additives is as follows: C2030-20PO-1 EO > PDMS, OH terminated > C1618-28PO-2EO > C1618-25PO-1EO > PPG-400.

### Experiment 8:

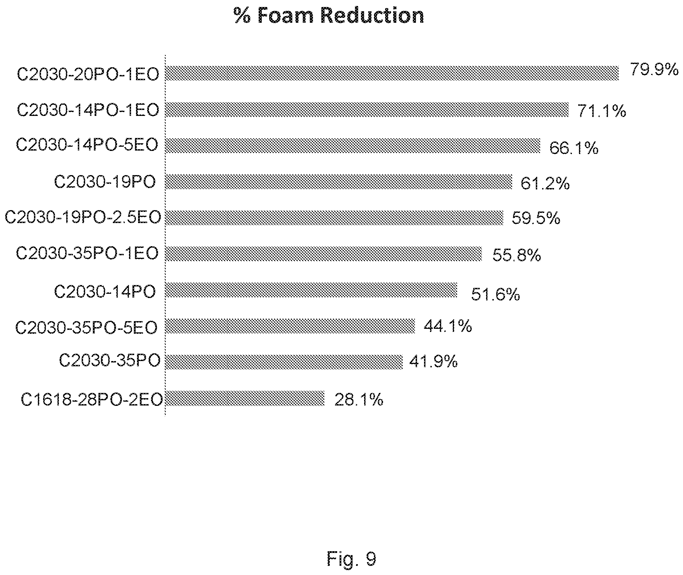

Using the experimental procedure as described for Experiment 3, variation of the number of PO and EO units, using the same hydrophobe, aimed to compare each additive's ability to destroy stable surface foam and to act as a true defoamer by optimizing the PO/EO balance. Figure 9 depicts a comparison offoam height reduction after dosage of each additive, respectively.

The results show that the defoamer C2030-20PO-1EO performed the best, but all defoamers were able to reduce the foam to a significant extent. The ratio of moles of PO to moles of EO is from 14: 1 to 20 : 1, and preferably 20 : 1.

### Experiment 9:

Defoamers / antifoamers perform well when they are ultra-dispersible in the feed. Low particle size improves the dispersibility of the defoamer / antifoamer in the aqueous feeds. Table 5 compares the defoamers based on particle size.

**Table 5: Comparison of the % foam reduction and average particle size.**

| **Defoamer** | **Foam Reduction** | **Avg. Particle Size (micron)** |
|---|---|---|
| C₁₆₋₁₈OH-28PO/2EO | 28.14 | 67.8402 |
| C₂₀₋₃₀OH-35PO/1EO | 55.83 | 43.5514 |
| C₂₀₋₃₀OH-14PO/1EO | 71.1 | 13.2715 |
| C₂₀₋₃₀OH-20PO/1EO | 79.93 | 3.9921 |

As can be seen, the alcohol alkoxylate or alcohol alkoxylate mixture used in the present invention has a lower particle size than the prior art defoamer. The defoamer / antifoamer used in the present invention has an average particle size less than 45µm, preferably less than 15 µm, and more preferably less than 4 µm.

## Claims

1. The use of an alcohol alkoxylate or an alcohol alkoxylate mixture as a concentrated defoamer, antifoamer and / or deaerator wherein the alcohol alkoxylate or alcohol alkoxylate mixture comprises at least:
an alcohol alkoxylate, wherein said alcohol alkoxylate has a molecular structure as shown in [I]:
R-O-(CH₂(CH₃)CHO)ₘ-(CH₂CH₂O)ₙ-H [I]
wherein
R is a branched and / or linear alkyl group having from 20 to 50
carbon atoms,
m = 10 - 40, and
n = 1 - 5; and
wherein the ratio of moles of propylene oxide (PO) to moles of ethylene oxide (EO) is from 14:1 to 20:1; and
wherein the alcohol alkoxylate has an average particle size less than 45 µm.

2. The use of the alcohol alkoxylate or the alcohol alkoxylate mixture of claim 1 wherein R is a branched alkyl group.

3. The use of the alcohol alkoxylate or the alcohol alkoxylate mixture of claim 1 wherein R is a linear alkyl group.

4. The use of the alcohol alkoxylate or the alcohol alkoxylate mixture of any of claims 1 or 2 wherein R has 20 to 30 carbon atoms.

5. The use of the alcohol alkoxylate or the alcohol alkoxylate mixture of any of the claims above wherein m = 20 to 25 and n = 1 to 2.

6. The use of the alcohol alkoxylate or the alcohol alkoxylate mixture of any of the claims above wherein the ratio of moles of PO to moles of EO is 20:1.

7. The use of the alcohol alkoxylate or the alcohol alkoxylate mixture of any of the claims above wherein the alcohol alkoxylate has an average particle size less than 15 µm, preferably less than 4 µm.

8. The use of the alcohol alkoxylate or the alcohol alkoxylate mixture of any of the claims above wherein the alcohol alkoxylate or the alcohol alkoxylate mixture is added in a concentration of between 50 ppm and 3 000 ppm, more preferably between 100 and 2 500 ppm, most preferably between 100 and 500 ppm.

9. The use of the alcohol alkoxylate or the alcohol alkoxylate mixture of any of the claims above wherein the temperature ranges between 20 and 100°C, more preferably between 25 and 80°C.

10. The use of the alcohol alkoxylate or the alcohol alkoxylate mixture of any of the claims above wherein no additional additives, liquids or solids are added.

11. A method of defoaming an aqueous foam, said aqueous foam comprising an aqueous phase and a gas, or preventing foaming in an aqueous material or deaerating an aqueous material, said method comprising:
providing a composition comprising at least:
an alcohol alkoxylate, wherein said alcohol alkoxylate has a molecular structure as shown in [I]:
R-O-(CH₂(CH₃)CHO)ₘ-(CH₂CH₂O)ₙ-H [I]
wherein R is a branched and/or linear alkyl group having from 20 to 50 carbon atoms, m = 10 - 40,
n = 1 - 5, and
wherein the ratio of moles of propylene oxide (PO) to moles of ethylene oxide (EO) is from 14:1 to 20:1; and
wherein the alcohol alkoxylate has an average particle size less than 45 µm;
contacting the aqueous foam or the aqueous material with said composition.

## Patentansprüche

1. Verwendung eines Alkoholalkoxylats oder eines Alkoholalkoxylatgemisches als konzentrierter Entschäumer, konzentriertes Antischaummittel und/oder konzentriertes Entgasungsmittel, wobei das Alkoholalkoxylat oder das Alkoholalkoxylatgemisch mindestens umfasst:
ein Alkoholalkoxylat, wobei das Alkoholalkoxylat eine Molekülstruktur wie in (I) dargestellt aufweist:
R-O-(CH₂(CH₃)CHO)ₘ-(CH₂CH₂O)ₙ-H (I)
wobei
R ein verzweigter und/oder linearer Alkylrest mit 20 bis 50 Kohlenstoffatomen ist,
m = 10 - 40, und
n = 1 - 5; und
wobei das Verhältnis von Molen von Propylenoxid (PO) zu Molen von Ethylenoxid (EO) von 14:1 bis 20:1 beträgt; und
wobei das Alkoholalkoxylat eine mittlere Partikelgröße kleiner als 45 µm aufweist.

2. Verwendung des Alkoholalkoxylats oder des Alkoholalkoxylatgemisches nach Anspruch 1, wobei R ein verzweigter Alkylrest ist.

3. Verwendung des Alkoholalkoxylats oder des Alkoholalkoxylatgemisches nach Anspruch 1, wobei R ein linearer Alkylrest ist.

4. Verwendung des Alkoholalkoxylats oder des Alkoholalkoxylatgemisches nach einem der Ansprüche 1 oder 2, wobei R 20 bis 30 Kohlenstoffatome aufweist.

5. Verwendung des Alkoholalkoxylats oder des Alkoholalkoxylatgemisches nach einem der vorstehenden Ansprüche, wobei m = 20 bis 25 und n = 1 bis 2.

6. Verwendung des Alkoholalkoxylats oder des Alkoholalkoxylatgemisches nach einem der vorstehenden Ansprüche, wobei das Verhältnis von Molen von PO zu Molen von EO 20:1 beträgt.

7. Verwendung des Alkoholalkoxylats oder des Alkoholalkoxylatgemisches nach einem der vorstehenden Ansprüche, wobei das Alkoholalkoxylat eine mittlere Partikelgröße kleiner als 15 µm, vorzugsweise kleiner als 4 µm, aufweist.

8. Verwendung des Alkoholalkoxylats oder des Alkoholalkoxylatgemisches nach einem der vorstehenden Ansprüche, wobei das Alkoholalkoxylat oder das Alkoholalkoxylatgemisch in einer Konzentration zwischen 50 ppm und 3000 ppm, stärker bevorzugt zwischen 100 ppm und 2500 ppm, am meisten bevorzugt zwischen 100 ppm und 500 ppm, hinzugegeben wird.

9. Verwendung des Alkoholalkoxylats oder des Alkoholalkoxylatgemisches nach einem der vorstehenden Ansprüche, wobei sich die Temperatur zwischen 20 °C und 100 °C, stärker bevorzugt zwischen 25 °C und 80 °C, bewegt.

10. Verwendung des Alkoholalkoxylats oder des Alkoholalkoxylatgemisches nach einem der vorstehenden Ansprüche, wobei keine weiteren Zusätze, Flüssigkeiten oder Feststoffe hinzugefügt werden.

11. Verfahren zum Entschäumen eines wässrigen Schaums, wobei der wässrige Schaum eine wässrige Phase und ein Gas umfasst, oder zur Verhinderung der Schaumbildung in einem wässrigen Material oder zum Entgasen eines wässrigen Materials, wobei das Verfahren umfasst:
Bereitstellen einer Zusammensetzung, umfassend mindestens:
ein Alkoholalkoxylat, wobei das Alkoholalkoxylat eine Molekülstruktur wie in (I) dargestellt aufweist:
R-O-(CH₂(CH₃)CHO)ₘ-(CH₂CH₂O)ₙ-H (I)
wobei R ein verzweigter und/oder linearer Alkylrest mit 20 bis 50 Kohlenstoffatomen ist,
m = 10 - 40,
n = 1 - 5, und
wobei das Verhältnis von Molen von Propylenoxid (PO) zu Molen von Ethylenoxid (EO) von 14:1 bis 20:1 beträgt; und
wobei das Alkoholalkoxylat eine mittlere Partikelgröße kleiner als 45 µm aufweist; Inkontaktbringen des wässrigen Schaums oder des wässrigen Materials mit der Zusammensetzung.

## Revendications

1. Utilisation d'un alcoxylate d'alcool ou d'un mélange d'alcoxylate d'alcool en tant qu'agent démousseur, antimousse et/ou désaérateur concentré, dans laquelle l'alcoxylate d'alcool ou le mélange d'alcoxylate d'alcool comprend au moins :
un alcoxylate d'alcool, ledit alcoxylate d'alcool ayant une structure moléculaire telle que figurant au [1] :
R-O-(CH₂(CH₃)CHO)ₘ-(CH₂CH₂O)ₙ-H [I]
dans laquelle
R est un groupe alkyle ramifié et/ou linéaire ayant de 20 à 50 atomes de carbone,
m = 10 à 40, et
n = 1 à 5 ; et
dans laquelle le rapport des moles d'oxyde de propylène (OP) sur les moles d'oxyde d'éthylène (OE) se situe de 14:1 à 20:1 ; et
dans laquelle l'alcoxylate d'alcool a une taille moyenne de particules inférieure à 45 µm.

2. Utilisation de l'alcoxylate d'alcool ou du mélange d'alcoxylate d'alcool selon la revendication 1, dans laquelle R est un groupe alkyle ramifié.

3. Utilisation de l'alcoxylate d'alcool ou du mélange d'alcoxylate d'alcool selon la revendication 1, dans laquelle R est un groupe alkyle linéaire.

4. Utilisation de l'alcoxylate d'alcool ou du mélange d'alcoxylate d'alcool selon l'une quelconque des revendications 1 ou 2, dans laquelle R possède 20 à 30 atomes de carbone.

5. Utilisation de l'alcoxylate d'alcool ou du mélange d'alcoxylate d'alcool selon l'une quelconque des revendications précédentes, dans laquelle m = 20 à 25 et n = 1 à 2.

6. Utilisation de l'alcoxylate d'alcool ou du mélange d'alcoxylate d'alcool selon l'une quelconque des revendications précédentes, dans laquelle le rapport des moles d'OP sur les moles d'OE est de 20:1.

7. Utilisation de l'alcoxylate d'alcool ou du mélange d'alcoxylate d'alcool selon l'une quelconque des revendications précédentes, dans laquelle l'alcoxylate d'alcool a une taille moyenne de particules inférieure à 15 µm, de préférence inférieure à 4 µm.

8. Utilisation de l'alcoxylate d'alcool ou du mélange d'alcoxylate d'alcool selon l'une quelconque des revendications précédentes, dans laquelle l'alcoxylate d'alcool ou le mélange d'alcoxylate d'alcool est ajouté en une concentration d'entre 50 ppm et 3000 ppm, de manière mieux préférée d'entre 100 et 2500 ppm, de manière la mieux préférée d'entre 100 et 500 ppm.

9. Utilisation de l'alcoxylate d'alcool ou du mélange d'alcoxylate d'alcool selon l'une quelconque des revendications précédentes, dans laquelle la température se situe entre 20 à 100°C, de manière mieux préférée entre 25 et 80°C.

10. Utilisation de l'alcoxylate d'alcool ou du mélange d'alcoxylate d'alcool selon l'une quelconque des revendications précédentes, dans laquelle aucun additif, liquide ou solide n'est ajouté.

11. Procédé de démoussage d'une mousse aqueuse, ladite mousse aqueuse comprenant une phase aqueuse et un gaz, ou de prévention du moussage dans une matière aqueuse ou de désaération d'une matière aqueuse, ledit procédé comprenant :
la fourniture d'une composition comprenant au moins :
un alcoxylate d'alcool, ledit alcoxylate d'alcool ayant une structure moléculaire telle que figurant au [1] :
R-O-(CH₂(CH₃)CHO)ₘ-(CH₂CH₂O)ₙ-H [I]
dans laquelle R est un groupe alkyle ramifié et/ou linéaire ayant de 20 à 50 atomes de carbone, m = 10 à 40, n = 1 à 5, et
dans laquelle le rapport des moles d'oxyde de propylène (OP) sur les moles d'oxyde d'éthylène (OE) se situe de 14:1 à 20:1 ; et
dans laquelle l'alcoxylate d'alcool a une taille moyenne de particules inférieure à 45 µm ;
la mise en contact de la mousse aqueuse ou de la matière aqueuse avec ladite composition.
